# EUROPÄISCHE PATENTSCHRIFT

(11) **EP 2 955 046 B1**
(45) Veröffentlichungstag und Bekanntmachung des Hinweises auf die Patenterteilung: **04.01.2017**
(21) Anmeldenummer: 15164174.3
(22) Anmeldetag: 20.04.2015
(51) Int. Cl.: B60K 1/04

(54) **ELEKTRISCH BETREIBBARES FAHRZEUG, INSBESONDERE ELEKTROFAHRRAD, MIT VERBESSERTER BATTERIEANORDNUNG**
ELECTRICALLY OPERATED VEHICLE, IN PARTICULAR ELECTRIC BICYCLE, WITH IMPROVED BATTERY ASSEMBLY
VÉHICULE POUVANT FONCTIONNER DE MANIÈRE ÉLECTRIQUE, EN PARTICULIER VÉLO ÉLECTRIQUE, DOTÉ D'UN SYSTÈME DE BATTERIE AMÉLIORÉ

(30) Priorität: 11.06.2014 DE 102014211068
(43) Veröffentlichungstag der Anmeldung: 16.12.2015
(73) Patentinhaber: ROBERT BOSCH GMBH, 70442 Stuttgart (DE)
(72) Erfinder: van Eyndhoven, Adriaan, 70180 Stuttgart (DE); Schmitz, Daniela, 72766 Reutlingen (DE); Meier, Thomas, 72555 Metzingen (DE)

(56) Entgegenhaltungen:
- EP-A1- 2 230 164
- EP-A2- 0 794 113
- EP-A2- 0 908 380

## Beschreibung

### Stand der Technik

Die vorliegende Erfindung betrifft ein elektrisch und/oder mit Muskelkraft betreibbares Fahrzeug, insbesondere ein Elektrofahrrad, mit einer verbesserten Batterieanordnung für eine einfachere Handhabung der Batterie im Betrieb sowie ein Verfahren zum Laden einer Batterie.

Elektrische und/oder mit Muskelkraft betreibbare Fahrzeuge sind aus dem Stand der Technik in unterschiedlichen Ausgestaltungen bekannt. Insbesondere werden in jüngster Zeit Elektrofahrräder immer beliebter. Eine Batterie, d.h., ein wiederaufladbarer elektrischer Energiespeicher, wird bei Elektrofahrrädern beispielsweise an einem Rahmen oder im Bereich eines Gepäckträgers angeordnet. Auch wird versucht, die Batterie vollständig in Rahmenbereichen des Elektrofahrrads unterzubringen, wie es beispielhaft aus der EP 2 230 164 A1 bekannt ist. Hierbei sind jedoch aufgrund der unterschiedlichen Rahmengeometrien üblicherweise nur individuelle Lösungen mit entsprechenden Kosten darstellbar. Es wäre daher wünschenswert, eine verbesserte Anbaumöglichkeit einer Batterie an einem elektrischen Fahrzeug, insbesondere einem Elektrofahrrad, zu haben sowie ein einfaches Laden der Batterie zu ermöglichen.

### Offenbarung der Erfindung

Das erfindungsgemäße elektrisch und/oder mit Muskelkraft betreibbare Fahrzeug mit den Merkmalen des Anspruchs 1 weist eine verbesserte Anbauposition der Batterie auf, wobei insbesondere auch ein Laden der Batterie in einem Zustand, in welchem die Batterie am Fahrzeug angeordnet bleibt, möglich ist, ohne dass hierfür ein zusätzlicher Ladekontakt an der Batterie vorgesehen werden muss. Hierbei kann einfaches und kompaktes Einbaukonzept realisiert werden. Das erfindungsgemäße Fahrzeug umfasst eine Batterie mit einem ersten elektrischen Anschluss und eine Haltevorrichtung mit einem zweiten elektrischen Anschluss für eine Kontaktierung des ersten elektrischen Anschlusses der Batterie. Die Haltevorrichtung ist dabei am Fahrzeug angeordnet und zwischen der Batterie und der Haltevorrichtung ist eine Nut-Nutenstein-Verbindung vorgesehen. Die Nut-Nutenstein-Verbindung umfasst eine Nut und einen Nutenstein derart, dass ein Drehen der Batterie an der Haltevorrichtung möglich ist, ohne dass die Batterie von der Haltevorrichtung gelöst werden muss.

Die Unteransprüche zeigen bevorzugte Weiterbildungen der Erfindung.

Vorzugsweise ist eine Drehachse zum Drehen der Batterie an der Haltevorrichtung derart angeordnet, dass diese Drehachse mit einer Mittelachse des Nutensteins zusammenfällt. Hierdurch kann ein besonders kompakter Aufbau verwirklicht werden.

Weiter bevorzugt ist die Haltevorrichtung zweiteilig ausgeführt und umfasst einen ersten und einen zweiten Teil. Der erste Teil umfasst dabei den elektrischen Anschluss der Haltevorrichtung und der zweite Teil umfasst die Nut oder den Nutenstein der Nut-Nutenstein-Verbindung. Durch die Trennung des elektrischen Anschlusses von der die Drehung der Batterie an der Haltevorrichtung ermöglichenden Nut-Nutenstein-Verbindung kann somit eine hohe Variabilität für unterschiedliche Fahrzeuge, insbesondere unterschiedliche Elektrofahrräder mit verschiedenen Rahmengeometrien, bereitgestellt werden.

Ein besonders einfacher Aufbau ergibt sich, wenn vorzugsweise die Nut der Nut-Nutenstein-Verbindung in der Batterie vorgesehen ist und der Nutenstein an der Haltevorrichtung vorgesehen ist.

Besonders bevorzugt umfasst die Batterie eine erste Reihe von Batteriezellen und eine zweite Reihe von Batteriezellen, wobei die Nut in der Batterie zwischen den beiden Reihen von Batteriezellen angeordnet ist. Somit sind zu beiden Seiten der Nut Batteriezellen angeordnet, so dass ein sehr kompakter Aufbau möglich ist. Die Nut an der Batterie ist dabei vorzugsweise mittig an einer Seitenfläche der Batterie angeordnet.

Weiter bevorzugt verläuft ein erstes Ende der Nut bis zu einem Rand der Batterie, so dass die Nut am Rand offen ist. Dadurch kann eine vollständige Entnahme der Batterie von der Haltevorrichtung auf einfache Weise verwirklicht werden. Besonders bevorzugt weist die Nut dabei am offenen Ende eine Einführhilfe, insbesondere eine Abschrägung der Nut auf. Alternativ ist die Nut an einer Nutseite freigeschnitten.

Das erfindungsgemäße Fahrzeug ist vorzugsweise ein Elektrofahrrad und die Batterie ist am Elektrofahrrad an einem Sattelrohr, insbesondere zwischen dem Sattelrohr und einem Hinterrad des Elektrofahrrads angeordnet. Dadurch kann ein sehr kompakter und Platz sparender Einbau der Batterie am Elektrofahrrad ermöglicht werden. Auch muss dabei keine Geometrieänderung eines Fahrradrahmens vorgenommen werden. Auch ist die Batterie an dieser Position leicht für den erfindungsgemäßen Drehvorgang an der Haltevorrichtung erreichbar.

Um ein besonders leichtgängiges Drehen der Batterie an der Haltevorrichtung zu ermöglichen, ist der Nutenstein vorzugsweise derart ausgebildet, dass dieser einen zylindrischen Kopf umfasst. Hierdurch kann die Batterie insbesondere um 360° an der Haltevorrichtung ohne Einschränkungen gedreht werden.

Weiter bevorzugt umfasst die Batterie genau einen elektrischen Anschluss, welcher sowohl zur Kontaktierung des elektrischen Anschlusses der Haltevorrichtung dient als auch zum Anstecken eines Ladekabels oder dergleichen. Dadurch wird ein einfacher und kostengünstiger Aufbau der Batterie beibehalten.

Darüber hinaus wird mit der Erfindung auch eine Batterie beansprucht, die in einem Fahrzeug, insbesondere einem elektrisch betriebenen Fahrrad verwendet werden kann. Hierzu ist die Batterie mit einer Nut ausgestattet, die ein Teil einer Nut-Nutenstein-Haltevorrichtung an dem Fahrzeug bildet. Für die Arretierung kann eine Aussparung an einem Ende der Batterie vorgesehen sein, insbesondere mit einem Freischnitt, die auch als Anschlag für die Befestigung an der Haltevorrichtung dienen kann. Darüber hinaus kann auch der (einzige) elektrische Anschluss der Batterie, welcher sowohl für die Beladung als auch für die Nutzung der Batterie verwendet werden kann, in dieser Aussparung untergebracht sein.

Die Erfindung betrifft ferner ein Verfahren zum Laden einer Batterie, welche an einer Haltevorrichtung an einem Fahrzeug, insbesondere einem Elektrofahrrad, angeordnet ist. Das Verfahren umfasst dabei die Schritte des Drehens der Batterie an der Haltevorrichtung, bis ein elektrischer Anschluss der Batterie, über welchen ein elektrischer Kontakt zwischen der Batterie und der Haltevorrichtung hergestellt wird, freiliegt. Anschließend wird ein Ladekabel oder dergleichen mit dem elektrischen Anschluss der Batterie in Kontakt gebracht, um die Batterie zu laden. Nach erfolgreichem Laden wird das Ladekabel oder dergleichen von dem elektrischen Anschluss der Batterie entfernt und die Batterie an der Haltevorrichtung in die Ausgangsposition zurückgedreht. Somit kann ein Laden der Batterie im angebauten Zustand am Fahrzeug erfolgen, wobei infolge eines Drehvorgangs der Batterie um eine Drehachse die Batterie in eine derartige Position gedreht werden kann, dass der elektrische Anschluss der Batterie leicht erreichbar ist. Hierdurch kann ein sehr bequemer Ladevorgang ohne Entnahme der Batterie vom Fahrzeug vorgenommen werden.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Darstellung eines Elektrofahrrads gemäß einem bevorzugten Ausführungsbeispiel der Erfindung,
- Figur 2: eine schematische Teildarstellung der Batterie des Elektrofahrrads im Betriebszustand,
- Figur 3: eine schematische Teildarstellung der Batterie während eines Drehvorgangs,
- Figur 4: eine schematische Darstellung eines Ladevorgangs der Batterie,
- Figuren 5 und 6: schematische Darstellungen einer Entnahme der Batterie vom Elektrofahrrad, und
- Figuren 7 und 8: schematische Darstellungen der Batterie.

### Bevorzugte Ausführungsform der Erfindung

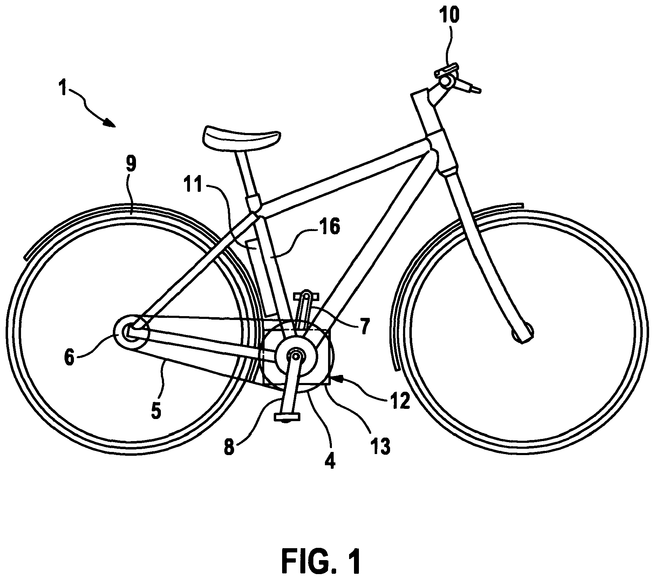

Nachfolgend wird unter Bezugnahme auf die Figuren 1 bis 8 ein Elektrofahrrad 1 mit einer Batterie 11 gemäß einem bevorzugten Ausführungsbeispiel der Erfindung im Detail beschrieben.

Erfindungsgemäß wird unter dem Begriff "Batterie" ein elektrischer, wiederaufladbarer Speicher verstanden. Das Elektrofahrrad 1 umfasst, wie aus Figur 1 ersichtlich ist, einen Kurbeltrieb 12 mit zwei Kurbeln 7, 8, an welchen Pedale angeordnet sind. Ein elektrischer Antrieb 13 ist in den Kurbeltrieb 12 integriert. An einem Hinterrad 9 ist z.B. eine Gangschaltung 6 angeordnet. Das Bezugszeichen 4 bezeichnet ein Kettenblatt am Kurbeltrieb 12, dessen Drehung mittels einer Kette 5 auf z.B. ein Ritzel der Gangschaltung 6 übertragen wird.

Eine Steuereinheit 10 ist an einem Lenker des Fahrrads angeordnet und mit dem elektrischen Antrieb 13 sowie der Batterie 11 verbunden.

Die Batterie 11 ist mittels einer Haltevorrichtung 2 an einem Sattelrohr 16 des Elektrofahrrads 1 angeordnet. Die Haltevorrichtung 2 umfasst einen ersten Teil 21 und einen zweiten Teil 22. Die beiden Teile der Haltevorrichtung 2 sind dabei bevorzugt am Sattelrohr 16 angeordnet. Dabei kann die Haltevorrichtung 2 einstückig ausgestaltet sein, d.h. dass das erste und das zweite Teil an entgegengesetzten Enden der Haltevorrichtung 2 angeordnet sind. Alternativ können das erste und zweite Teil 21 bzw. 22 auch aus zwei unterschiedlichen, nicht miteinander verbundenen separaten Teilen bestehen.

Weiterhin ist zwischen der Haltevorrichtung 2 und der Batterie 11 eine Nut-Nutenstein-Verbindung 3 vorgesehen. Die Nut-Nutensteinverbindung 3 umfasst eine Nut 30 sowie einen Nutenstein 31.

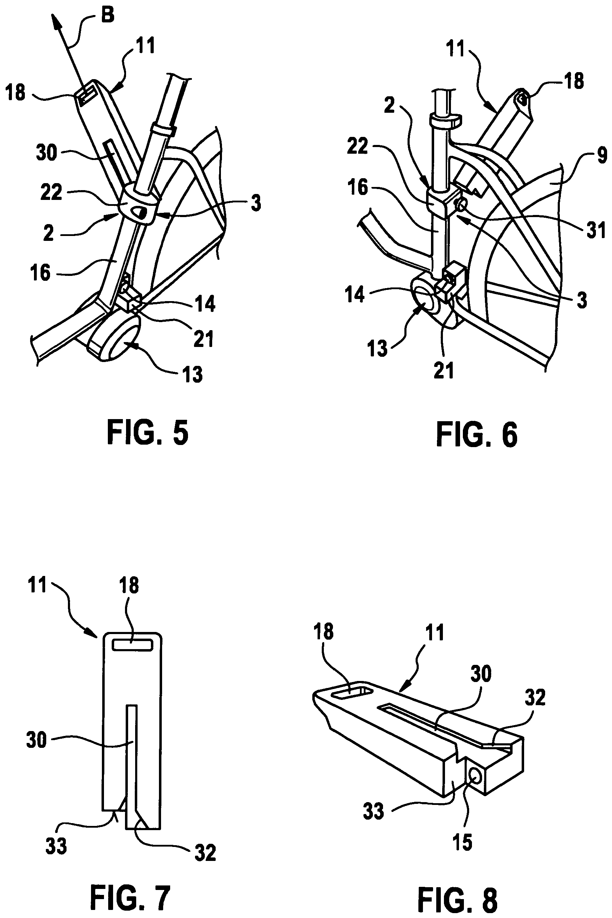

In diesem Ausführungsbeispiel ist die Nut 30 in der Batterie 11 vorgesehen und der Nutenstein 31 ist an der Haltevorrichtung 2 vorgesehen. Wie aus Figur 6 ersichtlich ist, ist der Nutenstein 31 dabei am zweiten Teil 22 der Haltevorrichtung 2 ausgebildet. Der Nutenstein 22 weist einen zylindrischen Kopf auf, welcher in der T-förmigen Nut 30 angeordnet ist.

Die Nut 30 in der Batterie verläuft dabei bis zu einem Rand der Batterie, so dass ein Ende der Nut 30 offen ist. Dies ist im Detail aus den Figuren 7 und 8 erkennbar. An dem offenen Ende der Nut 30 ist eine Einführhilfe 32 vorgesehen, welche in diesem Ausführungsbeispiel eine Abschrägung ist. Die Batterie 11 weist ferner einen Freischnitt 33 auf, an welchem der elektrische Anschluss 15 der Batterie angeordnet ist.

Alternativ kann allgemein eine Aussparung an einem Ende der Batterie 11 vorgesehen sein, die als Anschlag für die Haltevorrichtung 2, insbesondere für den ersten Teil 21 dient. Diese Aussparung kann optional auch den elektrischen Anschluss 14 enthalten, so dass bei einem Anliegen der Batterie 11 bzw. der Aussparung an dem zweiten Teil 21 der Kontakt zum Anschluss 15 geschlossen und gegenüber der Umgebung abgeschottet ist. Vorteilhafterweise ist dabei die Aussparung an einem Ende der Nut 30 angebracht bzw. mit der Einführhilfe 32 verbunden.

Die Nut 30 ist dabei an einer Seitenfläche der Batterie mittig angeordnet. Dadurch ist es möglich, dass zwei Reihen von Batteriezellen parallel zueinander jeweils seitlich der mittigen Nut 30 vorgesehen werden. Hierdurch ergibt sich ein sehr kompakter Aufbau der Batterie.

Die Nut 30 der Nut-Nutenstein-Verbindung 3 weist dabei eine relativ lange Nut auf, so dass eine Relativpositionierung zwischen der Batterie 11 und der Haltevorrichtung 2 in verschiedenen Positionen am Fahrrad möglich ist, wobei die Batterie 11 immer noch an der Haltevorrichtung 2 angeordnet ist. Dadurch ist es erfindungsgemäß möglich, dass die Batterie an verschiedenen Positionen um den Nutenstein 31 gedreht werden kann. Andererseits ist es auch möglich, dass zwischen dem Nutenstein 31 und der Batterie 11 eine lineare Bewegung entsprechend der Ausrichtung der Nut 30 erfolgt, bis die Batterie 11 vollständig von der Haltevorrichtung 2 entfernt ist. Dieser Zustand ist in Figur 6 dargestellt.

Der zweite Teil 22 der Haltevorrichtung 2 ist an einem Bereich des Elektrofahrrads angeordnet, an welchem das Sattelrohr 16 in einen Gehäusebereich des elektrischen Antriebs 13 übergeht.

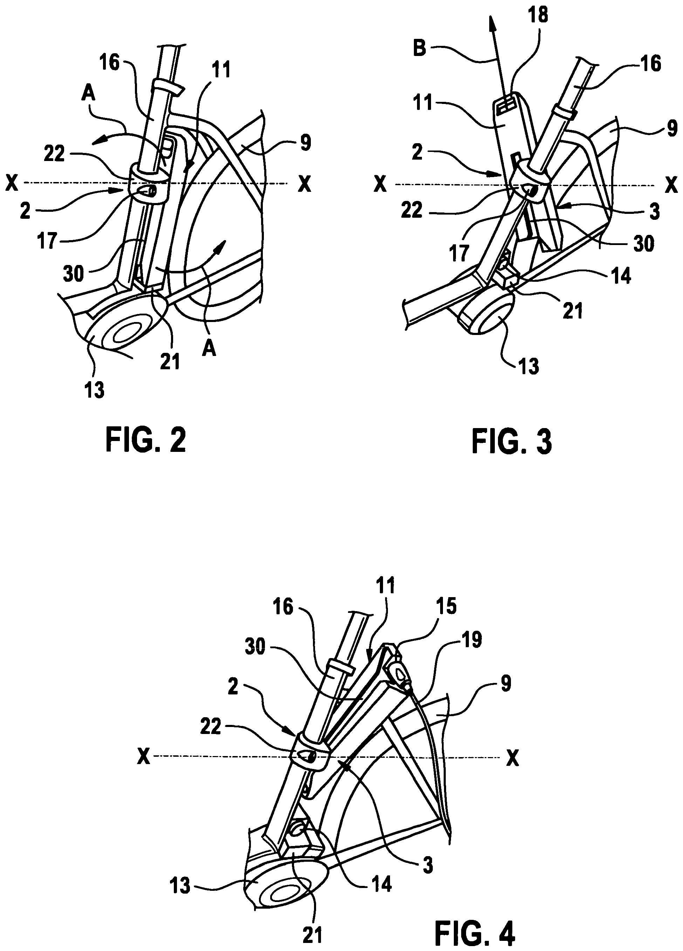

Wenn eine Ladung der Batterie erfolgen soll, kann erfindungsgemäß dieses Laden nun ohne vollständiges Entfernen der Batterie 11 vom Rahmen des Elektrofahrrads erfolgen. Erfindungsgemäß kann durch das Vorsehen der Nut-Nutenstein-Verbindung 3 zwischen der Batterie 11 und der Haltevorrichtung 2 ein Drehen der Batterie ermöglicht werden. Hierzu wird die Batterie aus der in Figur 2 gezeigten Ausgangsposition, in welcher ein elektrischer Kontakt zwischen der Batterie 11 und dem elektrischen Anschluss 14 der Haltevorrichtung 2 bzw. dem ersten Teil 21 vorhanden ist, in Richtung des Pfeils A gedreht. Dadurch kommen die elektrischen Anschlüsse 14, 15 von Batterie und Haltevorrichtung außer Kontakt. Durch das Vorsehen des Freischnitts 33 kann die Batterie 11 dabei ausschließlich in eine Richtung gedreht werden. Der Nutenstein 31 liegt dabei in einer Drehachse X-X der Batterie 11.

Hierbei sei angemerkt, dass es auch möglich ist, dass zusätzlich noch eine Verriegelung, beispielsweise ein Schloss 17, an der Haltevorrichtung 2 angeordnet ist, um die Batterie 11 am Rahmen des Elektrofahrrads zu sichern. Ferner ist bevorzugt für eine einfache Handhabung ein Griff 18 an der Batterie 11 vorgesehen.

Nach Zurücklegen eines kleinen Drehwinkels kann die Batterie 11 dann in Axialrichtung in Richtung der Nut 30 bewegt werden, was in Figur 3 durch den Pfeil B angedeutet ist. Dabei kann die Batterie 11 beispielsweise vollständig von der Haltevorrichtung 2 gelöst werden und vom Elektrofahrrad entnommen werden, wie in den Figuren 5 und 6 dargestellt.

Statt vollständig vom Elektrofahrrad 1 entnommen zu werden, kann die Batterie 11 allerdings auch am Elektrofahrrad aufgeladen werden. Dies ist in Figur 4 angedeutet, wobei ein Ladekabel 19 in den elektrischen Anschluss 15 der Batterie 11 eingesteckt ist. In dem in Figur 4 gezeigten Zustand ist die Batterie 11 dabei um fast 180° um den Nutenstein 31 gedreht. Hierdurch wird ein einfaches Handhaben des Ladekabels und des Steckvorgangs zwischen Ladekabel und Batterie 11 möglich. Die Batterie 11 kann dadurch an dem gleichen elektrischen Anschluss 15 wieder aufgeladen werden, welcher auch zur Kontaktierung des elektrischen Anschlusses 14 der Haltevorrichtung 2 dient. Somit muss die Batterie 11 nur einen einzigen elektrischen Anschluss 15 aufweisen.

Erfindungsgemäß kann die Batterie 11 somit in einer am Elektrofahrrad 1 angeordneten Position wieder aufgeladen werden oder alternativ auch vollständig vom Elektrofahrrad getrennt werden. Die Nut-Nutenstein-Verbindung 3 ermöglicht dabei ein Drehen der Batterie 11 an der Haltevorrichtung 2. Das Drehen der Batterie 11 kann dabei über einen Winkel von 360° erfolgen. Somit kann die Batterie für den Ladevorgang in eine optimale Position gebracht werden, so dass ein Ladekabel oder dergleichen einfach aufgesteckt bzw. entfernt werden kann.

Weiterhin kann erfindungsgemäß die Batterie 11 sehr Platz sparend in einem Bereich zwischen dem Sattelrohr 16 und dem Hinterrad 9 angeordnet werden. Diese Position ist sehr bevorzugt, da die Batterie 11 hier bei einem Fahrvorgang mit dem Elektrofahrrad nicht stört. Auch ist die Batterie an dieser Position am Elektrofahrrad gut vor Beschädigungen geschützt. Es sei ferner angemerkt, dass es selbstverständlich auch möglich ist, dass die Batterie 11 vor dem Sattelrohr 16 angeordnet wird oder die Batterie sowohl vor als auch hinter dem Sattelrohr 16 angeordnet ist.

## Patentansprüche

1. Elektrisch und/oder mit Muskelkraft betreibbares Fahrzeug, insbesondere Elektrofahrrad, umfassend
- eine Batterie mit einem ersten elektrischen Anschluss (14), und
- eine Haltevorrichtung (2) mit einem zweiten elektrischen Anschluss (15) für eine elektrische Kontaktierung des ersten elektrischen Anschlusses (14) der Batterie, und
- wobei die Haltevorrichtung (2) am Fahrzeug angeordnet ist,
**dadurch gekennzeichnet, dass**
zwischen der Batterie (11) und der Haltevorrichtung (2) eine Nut-Nutenstein-Verbindung (3), umfassend eine Nut (30) und einen Nutenstein (31), vorgesehen ist, derart, dass ein Drehen der Batterie (11) an der Haltevorrichtung (2) möglich ist.

2. Fahrzeug nach Anspruch 1, **dadurch gekennzeichnet, dass** der Nutenstein (31) in einer Drehachse (X-X) der Batterie (11) liegt.

3. Fahrzeug nach einem der vorhergehenden Ansprüche, **dadurch gekennzeichnet, dass** die Haltevorrichtung (2) zweiteilig ausgebildet ist und einen ersten Teil (21) mit dem zweiten elektrischen Anschluss (15) und einen zweiten, die Nut (30) oder den Nutenstein (31) der Nut-Nutenstein-Verbindung (3) aufweisenden Teil umfasst.

4. Fahrzeug nach einem der vorhergehenden Ansprüche, **dadurch gekennzeichnet, dass** die Nut (30) der Nut-Nutenstein-Verbindung (3) in der Batterie (11) vorgesehen ist und der Nutenstein (31) an der Haltevorrichtung (2) vorgesehen ist.

5. Fahrzeug nach Anspruch 4, **dadurch gekennzeichnet, dass** die Batterie (11) eine erste Reihe von Batteriezellen und eine zweite Reihe von Batteriezellen aufweist, wobei die Nut (30) an der Batterie (11) zwischen der ersten und zweiten Reihe von Batteriezellen angeordnet ist.

6. Fahrzeug nach Anspruch 4 oder 5, **dadurch gekennzeichnet, dass** ein erstes Ende der Nut (30) bis zu einem Rand der Batterie (11) verläuft, so dass die Nut (30) am Rand der Batterie offen ist.

7. Fahrzeug nach Anspruch 6, **dadurch gekennzeichnet, dass** die Nut (30) am offenen Ende eine Einführhilfe (32), insbesondere eine Abschrägung, aufweist.

8. Fahrzeug nach einem der vorhergehenden Ansprüche, **dadurch gekennzeichnet, dass** das Fahrzeug als Elektrofahrrad ausgebildet ist und die Batterie (11) an einem Sattelrohr (16) angeordnet ist, insbesondere zwischen dem Sattelrohr (16) und einem Hinterrad (9) des Elektrofahrrads.

9. Fahrzeug nach einem der vorhergehenden Ansprüche, **dadurch gekennzeichnet, dass** der Nutenstein (31) einen zylindrischen Kopf aufweist.

10. Fahrzeug nach einem der vorhergehenden Ansprüche, **dadurch gekennzeichnet, dass** die Batterie (11) genau einen elektrischen Anschluss (14) aufweist.

11. Batterie (11) zur Nutzung in einem Fahrzeug nach einem der vorhergehenden Ansprüche, wobei die Batterie eine Nut (30) einer Nut-Nutenstein-Verbindung (3) aufweist, in der ein Nutenstein (31) eingebracht werden kann, wobei insbesondere vorgesehen ist, dass eine Seite der Nut offen ist und eine Einführhilfe (32) aufweist.

12. Batterie (11) nach Anspruch 11 **dadurch gekennzeichnet, dass** die Batterie (11) genau einen elektrischen Anschluss (14) aufweist, wobei dieser elektrische Anschluss sowohl zur Beladung der Batterie als auch für den Betrieb an einem Fahrzeugs nach einem der Ansprüche 1 bis 10 verwendbar ist.

13. Batterie (11) nach Anspruch 11 oder 12, **dadurch gekennzeichnet, dass** die Batteriezellen parallel zueinander und jeweils seitlich der mittigen Nut (30) angeordnet sind.

14. Batterie (11) nach einem der Ansprüche 11 bis 13, **dadurch gekennzeichnet, dass** die Batterie (11) im Bereich eines Endes der Nut (30) eine Aussparung aufweist, die als Anschlag für eine Haltevorrichtung am Fahrzeug dient, wobei insbesondere vorgesehen ist, dass diese Aussparung einen Freischnitt (33) und/oder den elektrischen Anschluss (14) aufweist.

15. Verfahren zum Laden einer Batterie (11), insbesondere einer Batterie nach einem der Ansprüche 11 bis 14, welche an einer Haltevorrichtung (2) an einem Fahrzeug (1), insbesondere an einem Fahrzeug nach einem der Ansprüche 1 bis 10), angeordnet ist, umfassend die Schritte:
- Drehen der Batterie (11) um eine Drehachse (X-X) an der Haltevorrichtung (2) bis ein elektrischer Anschluss (14) der Batterie, über welchen ein elektrischer Kontakt zwischen der Batterie und einem elektrischen Anschluss (15) der Haltevorrichtung (2) hergestellt wird, freiliegt,
- Inkontaktbringen eines Ladekabels (19) oder dergleichen mit dem elektrischen Anschluss (14) der Batterie (11), um die Batterie (11) zu laden,
- Entfernen des Ladekabels (19) oder dergleichen vom elektrischen Anschluss (14) der Batterie (11) und
- Zurückdrehen der Batterie (11) in die Ausgangsposition an der Haltevorrichtung (2).

## Claims

1. Vehicle which can be operated electrically and/or by muscle power, in particular electric bicycle, comprising
- a battery with a first electrical connection (14), and
- a holding apparatus (2) with a second electrical connection (15) for making electrical contact with the first electrical connection (14) of the battery, and
- wherein the holding apparatus (2) is arranged on the vehicle,
**characterized in that**
a groove and sliding block connection (3), comprising a groove (30) and a sliding block (31), is provided between the battery (11) and the holding apparatus (2) in such a way that it is possible to rotate the battery (11) on the holding apparatus (2).

2. Vehicle according to Claim 1, **characterized in that** the sliding block (31) lies in a rotation axis (X-X) of the battery (11).

3. Vehicle according to either of the preceding claims, **characterized in that** the holding apparatus (2) is of two-part design and comprises a first part (21) with the second electrical connection (15) and a second part which has the groove (30) or the sliding block (31) of the groove and sliding block connection (3).

4. Vehicle according to one of the preceding claims, **characterized in that** the groove (30) of the groove and sliding block connection (3) is provided in the battery (11) and the sliding block (31) is provided on the holding apparatus (2).

5. Vehicle according to Claim 4, **characterized in that** the battery (11) has a first row of battery cells and a second row of battery cells, wherein the groove (30) is arranged on the battery (11) between the first and the second row of battery cells.

6. Vehicle according to Claim 4 or 5, **characterized in that** a first end of the groove (30) runs as far as an edge of the battery (11), so that the groove (30) is open at the edge of the battery.

7. Vehicle according to Claim 6, **characterized in that** the groove (30) has an insertion aid (32), in particular a bevel, at the open end.

8. Vehicle according to one of the preceding claims, **characterized in that** the vehicle is in the form of an electric bicycle and the battery (11) is arranged on a saddle tube (16), in particular between the saddle tube (16) and a rear wheel (9) of the electric bicycle.

9. Vehicle according to one of the preceding claims, **characterized in that** the sliding block (31) has a cylindrical head.

10. Vehicle according to one of the preceding claims, **characterized in that** the battery (11) has precisely one electrical connection (14).

11. Battery (11) for use in a vehicle according to one of the preceding claims, wherein the battery has a groove (30) of a groove and sliding block connection (3), in which groove a sliding block (31) can be inserted, wherein it is provided, in particular, that one side of the groove is open and has an insertion aid (32).

12. Battery (11) according to Claim 11, **characterized in that** the battery (11) has precisely one electrical connection (14), wherein this electrical connection can be used both to charge the battery and also for operation on a vehicle according to one of Claims 1 to 10.

13. Battery (11) according to Claim 11 or 12, **characterized in that** the battery cells are arranged parallel to one another and in each case to the side of the central groove (30).

14. Battery (11) according to one of Claims 11 to 13, **characterized in that** the battery (11) has a cutout in the region of an end of the groove (30), which cutout serves as a stop for a holding apparatus on the vehicle, wherein it is provided, in particular, that this cutout has a clearance (33) and/or the electrical connection (14).

15. Method for charging a battery (11), in particular a battery according to one of Claims 11 to 14, which battery is arranged on a holding apparatus (2) on a vehicle (1), in particular on a vehicle according to one of Claims 1 to 10, comprising the steps of:
- rotating the battery (11) about a rotation axis (X-X) on the holding apparatus (2) until an electrical connection (14) of the battery is exposed, electrical contact between the battery and an electrical connection (15) of the holding apparatus (2) being established by means of the said electrical connection,
- bringing a charging cable (19) or the like into contact with the electrical connection (14) of the battery (11) in order to charge the battery (11),
- removing the charging cable (19) or the like from the electrical connection (14) of the battery (11) and
- rotating the battery (11) back to the starting position on the holding apparatus (2).

## Revendications

1. Véhicule pouvant fonctionner électriquement et/ou par la force musculaire, notamment vélo électrique, comprenant :
- une batterie comportant une première borne électrique (14), et
- un dispositif de support (2) comportant une deuxième borne électrique (15) destinée à une mise en contact électrique avec la première borne électrique (14) de la batterie, et
- dans lequel le dispositif de support (2) est disposé sur le véhicule,
**caractérisé en ce qu'**il est prévu entre la batterie (11) et le dispositif de support (2) une liaison par rainure-coulisseau (3), comprenant une rainure (30) et un coulisseau (31), de manière à ce qu'une rotation de la batterie (11) soit possible sur le dispositif de support (2).

2. Véhicule selon la revendication 1, **caractérisé en, ce que** le coulisseau (31) se situe sur un axe de rotation (X-X) de la batterie (11).

3. Véhicule selon l'une des revendications précédentes, **caractérisé en ce que** le dispositif de support (2) est réalisé en deux parties et comprend une première partie (21) comportant la deuxième borne électrique (15) et une deuxième partie possédant la rainure (30) ou le coulisseau (31) de la liaison rainure-coulisseau (3).

4. Véhicule selon l'une des revendications précédentes, **caractérisé en ce que** la rainure (30) de la liaison rainure-coulisseau (3) est prévue dans la batterie (11) et **en ce que** le coulisseau (31) est prévu sur le dispositif de support (2).

5. Véhicule selon la revendication 4, **caractérisé en ce que** la batterie (11) possède une première série d'éléments de batterie et une deuxième série d'éléments de batterie, dans lequel la rainure (30) est disposée sur la batterie (11) entre les première et deuxième séries d'éléments de batterie.

6. Véhicule selon la revendication 4 ou 5, **caractérisé en ce qu'**une première extrémité de la rainure (30) s'étend jusqu'à un bord de la batterie (11) de manière à ce que la rainure (30) s'ouvre sur le bord de la batterie.

7. Véhicule selon la revendication 6, **caractérisé en ce que** la rainure (30) présente au niveau de son extrémité ouverte un accessoire d'insertion (32), notamment une partie biseautée.

8. Véhicule selon l'une des revendications précédentes, **caractérisé en ce que** le véhicule est réalisé sous la forme d'un véhicule électrique et **en ce que** la batterie (11) est disposée sur un tube de selle (16), notamment entre le tube de selle (16) et une roue arrière (9) du véhicule électrique.

9. Véhicule selon l'une des revendications précédentes, **caractérisé en ce que** le coulisseau (31) possède une tête cylindrique.

10. Véhicule selon l'une des revendications précédentes, **caractérisé en ce que** la batterie (11) comporte exactement une borne électrique (14).

11. Batterie (11) destinée à être utilisée dans un véhicule selon l'une quelconque des revendications précédentes, dans lequel la batterie possède une rainure (30) d'une liaison rainure-coulisseau (3) dans laquelle un coulisseau (31) peut être introduit, dans lequel il est notamment prévu de faire en sorte qu'un côté de la rainure soit ouvert et présente un accessoire d'insertion (32).

12. Batterie (11) selon la revendication 11, **caractérisée en ce que** la batterie (11) possède exactement une borne électrique (14), dans laquelle ladite borne électrique peut être utilisée aussi bien pour charger la batterie que pour sa mise en fonctionnement sur un véhicule selon l'une des revendications 1 à 10.

13. Batterie (11) selon la revendication 11 ou 12, **caractérisée en ce que** les éléments de batterie sont disposés parallèlement les uns aux autres et sont respectivement situés de part et d'autre de la rainure centrale (30).

14. Batterie (11) selon l'une des revendications 11 à 13, **caractérisée en ce que** la batterie (11) présente, dans la zone d'une extrémité de la rainure (30), un évidement qui est utilisé en tant que butée pour un dispositif de support sur le véhicule, dans lequel il est notamment fait en sorte que ledit évidement présente une découpe (33) et/ou la borne électrique (14).

15. Procédé pour charger une batterie (11), notamment une batterie selon l'une des revendications 11 à 14 qui est disposée sur un dispositif de support (2) sur un véhicule (1), notamment sur un véhicule selon l'une des revendications 1 à 10, comprenant les étapes consistant à :
- mettre en rotation la batterie (11) autour d'un axe de rotation (X-X) sur le dispositif de support (2) jusqu'à ce qu'une borne électrique (14) de la batterie soit libérée, borne par l'intermédiaire de laquelle un contact électrique est établi entre la batterie et une borne électrique (15) du support du dispositif de support (2),
- mettre en contact un câble de charge (19) ou autre avec une borne électrique (14) de la batterie (11) afin de charger la batterie (11),
- retirer le câble de charge (19) ou autre de la borne électrique (14) de la batterie (11), et
- mettre de nouveau en rotation la batterie (11) à la position de sortie sur le dispositif de support (2).
